# EUROPÄISCHE PATENTSCHRIFT

(11) **EP 2 110 721 B1**
(45) Veröffentlichungstag und Bekanntmachung des Hinweises auf die Patenterteilung: **29.08.2012**
(21) Anmeldenummer: 08007466.9
(22) Anmeldetag: 16.04.2008
(51) Int. Cl.: G05B 19/05

(54) **Verfahren zum Erstellen einer Tabelle im Automatisierungsumfeld**
Method for creating a table in an automation environment
Procédé de création d'un tableau dans l'environnement d'automatisation

(43) Veröffentlichungstag der Anmeldung: 21.10.2009
(73) Patentinhaber: SIEMENS AKTIENGESELLSCHAFT, 80333 München (DE)
(72) Erfinder: Bluhm, Anja, 90537 Feucht (DE); Houdek, Rene, 90471 Nürnberg (DE); Perna, Fabio, 90409 Nürnberg (DE); Prechtl, Christian, 95508 Kulmain (DE)

(56) Entgegenhaltungen:
- SCHELS I: "Microsoft Office Excell 2003" 2006, MARKT + TECHNIK VERLAG , MÜNCHEN , XP002491488 * Seite 238 - Seite 244 * * Seite 698 - Seite 699 *

## Beschreibung

Unter einem PLC (Programmable Logic Control) wird ein digitaler Computer bzw. eine Steuervorrichtung verstanden, die zur Automatisierung industrieller Prozesse wie beispielsweise der Steuerung von Maschinen oder Fliessbänder verwendet werden.

Grundsätzlich wird im Automatisierungsumfeld dem Kunden/ Endanwender eine Projektierungssoftware zur Verfügung gestellt. Dieser erstellt dann seinerseits unter Zuhilfenahme dieser Projektierungssoftware eigene Programme, Tabellen/ Listen und Daten für seinen speziellen Anwendungsfall, die dann auf den PLCs zum Ablauf gelangen.

Insbesondere werden in die Projektierungssoftware sogenannte Grids oder Tabelleneditoren implementiert. Bei einem Tabelleneditor handelt es sich um eine (noch nicht mit Daten befüllte) Tabelle oder Liste, die dem Anwender als Teil der Projektierungssoftware übergeben wird. Der Tabelleneditor weist eine Mehrzahl von Spalten auf, die eine logische Verknüpfung zueinander aufweisen können. Technische Einrichtungen wie beispielsweise ein Baustein werden quasi in den Tabelleneditor der Projektierungssoftware abgebildet. Dem Anwender wird damit eine Abbildung des betreffenden Bausteines als (leeres) Gittergerüst mitgegeben. Das Gittergerüst beinhaltet somit eine Abbildung der Eigenschaften des Bausteines, also der Eingangs - und Ausgangsparameter. Der Tabelleneditor wird dann vom Anwender mit den relevanten Daten befüllt.

Bestimmte Spalten können nun über ihre Inhalte logisch miteinander verknüpft oder gekoppelt sein. Eine Trennung dieser logisch verknüpften Spalten wird beim Stand der Technik für den (durchaus sinnvollen) Fall zugelassen, Spalten im Zuge des Verschiebens oder Ausblendens bearbeiten zu können, was für den Anwender eine gewisse Flexibilität in der Bearbeitung seiner Tabellen und Listen bedeutet. Werden aber logisch miteinander verknüpfte bzw. gekoppelte Spalten getrennt, wird damit die Logik des Tabelleneditors zerstört.

Wird das Verschieben oder Ein-/ Ausblenden von Spalten grundsätzlich zugelassen, muss dem Anwender eine Möglichkeit gegeben werden, getrennte Spalten jederzeit wieder aufzufinden, um damit die Logik des Tabelleneditors aufrechterhalten zu können. Dies erfolgt, indem eine entsprechend lange und ausführliche, selbsterklärende Spaltenbeschriftung gewählt wird. Damit kann auch nach einer Trennung logisch zusammenhängender Spalten jede für sich wieder identifiziert und wieder zusammengeführt werden. Dies muss jedoch händisch vorgenommen werden, was in der Praxis einen nicht unerheblichen Zeitaufwand für den Anwender bedeutet.

Aus dem Stand der Technik ist es weiterhin bekannt, das Verschieben oder Ein-/ Ausblenden von Spalten grundsätzlich zu unterbinden. Damit fehlen aber dem Anwender bei der Projektierung seiner Software im Automatisierungsumfeld wesentliche Hilfsmittel bei der Erstellung eigener Lösungen.

Ferner ist aus Tabellenkalkulationsprogrammen der Büroautomatisierung (z. B. Microsoft Office Excel 2003) bekannt, Spalten logisch derart miteinander zu verknüpfen, dass sie immer nur gemeinsam verschoben sowie ein- oder ausgeblendet werden können. Dazu müssen die Spalten aber eine gemeinsam Graphik bilden, sodass die Komponenten der Graphik nicht mehr einzeln änderbar sind.

Der Erfindung liegt die Aufgabe zugrunde, einen Weg aufzuzeigen, wie die Bearbeitung logisch zusammenhängender Spalten in einem Tabelleneditor effizient gestaltet werden kann.

Die Erfindung wird ausgehend von den im Oberbegriff der Patentansprüche 1 und 4 angegebenen Merkmale durch die im kennzeichnenden Teil beanspruchten Merkmale gelöst.

Der Vorteil der Erfindung ist darin zu sehen, dass beim Erstellen der Projektierungssoftware bestimmte Spalten im Tabelleneditor als zusammengehörig definiert werden und damit quasi eine Einheit bilden. Dieses als "Twin Columns" bezeichnete Leistungsmerkmal bietet dabei alle gängigen Funktionen, die auch für eine einzelne Spalte im Grid zur Verfügung gestellt werden. Ferner ermöglicht sie dem Anwender die Spaltenanordnung seinen Bedürfnissen anzupassen, ohne dabei eine unvorteilhafte Zerlegung zusammengehöriger Spalten vorzunehmen. Letztlich erlaubt die Erfindung eine knappe Beschriftung in der Spaltenbeschriftung (Header), da die Bezeichnung immer im Kontext zu den benachbarten "Twin Columns" gesehen wird. Daraus resultiert ferner eine optimierte Bildschirmaufteilung und kurze und selbsterklärende Bezeichnungen.

Die Erfindung wird im folgenden anhand eines figürlich dargestellten Ausführungsbeispiels näher erläutert.

Es zeigen:
- Figur 1: die Verhältnisse im Tabelleneditor gemäss der Er- findung,
- Figur 2: die Visualisierung logisch zugeordneter Spalten im Moment des Verschiebens,
- Figur 3: das Kontextmenu mit Gruppierung für das Ein-/Aus- blenden der "Twin Columns",

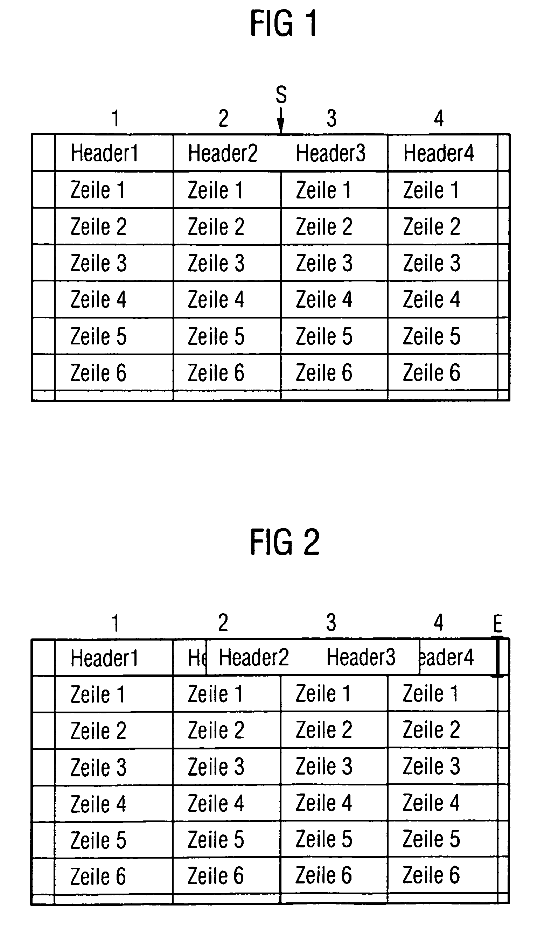

Fig. 1 zeigt die Verhältnisse im Tabelleneditor gemäss der Erfindung. Demgemäss ist eine erste Spalte 1 vorgesehen, die eine Mehrzahl von Zeilen Zeile 1 ... Zeile 6 aufzeigt. Beispielhaft sind somit 6 Zeilen aufgezeigt. Spalte 1 weist ferner die Spaltenbeschriftung Header1 auf. Weiterhin sind Fig. 1 die Spalten 2, 3, 4 mit den jeweiligen Spaltenbeschriftungen Header2, Header3, Header4 entnehmbar. Die Spalten 2, 3, 4 weisen ebenfalls 6 Zeilen auf.

Die Spalten 2, 3 sollen nun gemäss vorliegendem Ausführungsbeispiel logisch miteinander verknüpft sein. Erfindungsgemäss ist ein Leistungsmerkmal "Twin Columns" vorgesehen, das dafür Sorge trägt, dass beide Spalten 2, 3 nicht durch Verschieben oder Ausblenden getrennt werden können. Die entsprechenden Verhältnisse sind Fig. 2 zu entnehmen. Dies wird erreicht, indem die beiden Spalten, deren Inhalte logisch miteinander verknüpft sind, als eine Einheit definiert werden. Dieser Umstand wird dem Anwender z. B. durch andersfarbige oder weniger kontrastreiche Separatoren S - wie in Fig. 1 aufgezeigt - in der Spaltenbeschriftung visualisiert.

Gemäss vorliegendem Ausführungsbeispiel werden lediglich zwei logisch zugeordnete Spalten 2, 3 angesprochen, die eine 1:1 Zuordnung aufweisen. Dies bedeutet, dass Zeile 1 von Spalte 2 der Zeile 1 von Spalte 3 zugeordnet ist usw. Grundsätzlich ist die Erfindung aber nicht auf zwei Spalten beschränkt. So können eine Vielzahl von logisch einander zugeordneter Spalten zur Anwendung gelangen. Die Zuordnung kann dabei auch sehr viel komplexere Formen annehmen, als wie dies bei einer 1:1 Zuordnung der Fall ist.

Jede der "Twin Columns" weist für sich alle innerhalb eines Grid bekannten Spaltenfunktionen auf. Hierzu zählen das spaltenweise Selektions - und Sortierverhalten ebenso wie das Verändern der Spaltenbreite durch Ziehen der Separatoren.

Trotzdem gibt es entscheidende Unterschiede zu den verbleibenden Spalten des Grid, also den Spalten, die nicht eine Einheit mit einer anderen Spalte bilden.

So ist das Verschieben der Spalten durch den Anwender immer nur gemeinsam möglich. Initiiert der Anwender also das Verschieben (z. B. über das Betätigen der Maus + Ziehen über einen der Header der Gruppe von "Twin Columns"), werden damit alle Spalten mitverschoben, die zu dieser Gruppe gehören. Der Anwender erhält hierüber sofort ein visuelles Feedback z. B. über die Anzeige eines Schattenobjektes aller betroffenen Header während des Verschiebevorganges (Fig. 2). Der Verschiebevorgang selbst unterscheided sich dabei nicht von dem einer einzelnen Spalte, d. h. es wird abhängig von der Cursorbewegung während des Ziehens ein Einfügecursor E im Grid Header angezeigt, an dessen Position die Gruppe der "Twin Columns" nach Loslassen der linken Maustaste eingefügt wird. Die entsprechenden Verhältnisse sind in Fig. 2 zu entnehmen, wo der Moment des Verschiebens von Spalte 2 aufgezeigt ist. Da diese Spalte 3 logisch zugeordnet ist, wird Spalte 3 mitverschoben.

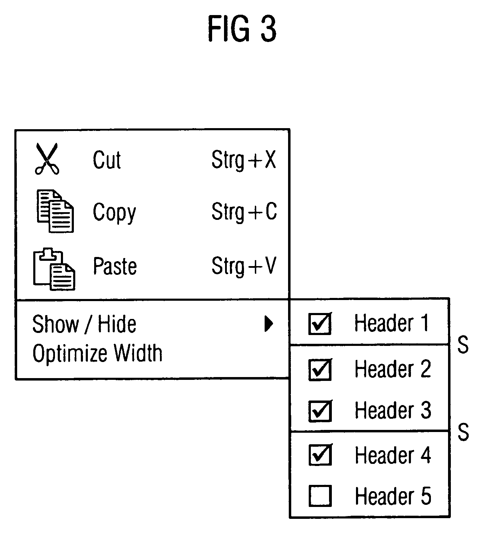

In Fig. 3 ist das Ein-/ Ausblenden der "Twin Columns" über das Header Kontextmenu aufgezeigt. Beide Spalten können immer nur gemeinsam ein - oder ausgeblendet werden. Die zusammengehörenden Spalten werden dem Anwender beispielsweise über Menügruppen visualisiert, in der die An-/Abwahl einer Checkbox alle zu dieser Gruppe gehörigen Checkboxen löscht/ setzt. Unabhängig von diesem gemeinsamen Aus-/Einblenden der "Twin Columns" ist die Verkleinerung jeder einzelnen "Twin Column" durch Ziehen des Headerseparators (auch bis zum Verschwinden der betroffenen Spalte) möglich. In diesem Fall erhält der Anwender eine geeignete Visualisierung der versteckten "Twin Columns", d. h. einen visuellen Hinweis, dass weitere Spalten aufgezogen werden können.

## Patentansprüche

1. Verfahren zum Erstellen einer Tabelle in einem Automatisierungsumfeld, mit einem Tabelleneditor, der eine Mehrzahl von Spalten (1,..,4) bereitstellt, wobei die Inhalte wenigstens zweier Spalten (2, 3) logisch miteinander verknüpft sind,
**dadurch gekennzeichnet,**
**dass** die wenigstens zwei Spalten (2, 3), deren Inhalte logisch miteinander verknüpft sind, auf eine solche Weise als eine Einheit definiert werden, dass
einerseits:
die wenigstens zwei Spalten (2, 3) der Einheit immer nur gemeinsam verschoben werden können und/oder
die wenigstens zwei Spalten (2, 3) der Einheit immer nur gemeinsam ein- oder ausgeblendet werden können,
aber andererseits
jeder der wenigstens zwei Spalten der Einheit dennoch alle auch sonst für jede einzelne Spalte durch den Tabelleneditor zugeordneten Spaltenfunktionen zugeordnet sind, insbesondere das spaltenweise Selektions- und Sortierverhalten und die Möglichkeit zum Verändern der Spaltenbreite durch Ziehen der Separatoren.

2. Verfahren nach Anspruch 1, **dadurch gekennzeichnet, dass** die wenigstens zwei Spalten (2, 3), deren Inhalte logisch miteinander verknüpft sind, dem Anwender als optische Einheit visualisierbar sind.

3. Verfahren nach Anspruch 1 oder 2 , **dadurch gekennzeichnet, dass** die wenigstens zwei Spalten (2, 3), deren Inhalte logisch miteinander verknüpft sind, dem Anwender durch andersfarbige Separatoren in der Spaltenbeschriftung visualisierbar sind.

4. Vorrichtung zum Erstellen einer Tabelle in einem Automatisierungsumfeld, mit einem Tabelleneditor, der eine Mehrzahl von Spalten bereitstellt,
**dadurch gekennzeichnet,**
**dass** Mittel vorgesehen sind, die wenigstens zwei Spalten (2, 3), deren Inhalte logisch miteinander verknüpft sind, als eine Einheit definieren, bei der die wenigstens zwei Spalten (2, 3) der Einheit immer nur gemeinsam verschoben werden können und/oder immer nur gemeinsam ein- oder ausgeblendet werden können, wobei aber andererseits jeder der wenigstens zwei Spalten der Einheit dennoch alle auch sonst für jede einzelne Spalte durch den Tabelleneditor zugeordnete Spaltenfunktionen zugeordnet bleiben.

5. Vorrichtung nach Anspruch 4,
**dadurch gekennzeichnet,**
**dass** Mittel vorgesehen sind, die die wenigstens zwei Spalten (2, 3), deren Inhalte logisch miteinander verknüpft sind, dem Anwender als optische Einheit visualisieren.

## Claims

1. Method for creating a table in an automation environment, having a table editor, which provides a plurality of columns (1,..,4), with the contents of at least two columns (2, 3) being logically linked to one another,
**characterised in that**
the at least two columns (2, 3), the contents of which are logically linked to one another, are defined in such a way as one unit such that
on the one hand:
the at least two columns (2, 3) of the unit can only ever be moved together and/or
the at least two columns (2, 3) of the unit can only ever be shown or hidden together,
but on the other hand
each of the at least two columns of the unit is however assigned all column functions which are otherwise also assigned by the table editor to each individual column, in particular the column by column selection and sorting behaviour and the possibility of changing the column width by pulling the separators.

2. Method according to claim 1,
**characterised in that**
the at least two columns (2, 3), the contents of which are logically linked to one another, can be visualised to the user as an optical unit.

3. Method according to claim 1 or 2,
**characterised in that**
the at least two columns (2, 3), the contents of which are logically linked to one another, can be visualised to the user by means of different-coloured separators in the column header.

4. Method for creating a table in an automation environment, having a table editor, which provides a plurality of columns,
**characterised in that**
means are provided, which define at least two columns (2, 3), the contents of which are logically linked to one another, as one unit, in which the at least two columns (2, 3) of the unit can only ever be moved together and/or can only ever be shown or hidden together, wherein on the other hand each of the at least two columns of the unit however remains assigned all column functions also otherwise assigned by the table editor for each individual column.

5. Method according to claim 4,
**characterised in that**
means are provided, which visualise the at least two columns (2, 3), the contents of which are logically linked to one another, to the user as one optical unit.

## Revendications

1. Procédé de création d'un tableau dans un environnement d'automatisation par un éditeur de tableau, qui met à disposition une multiplicité de colonnes ( 1, ...,4 ), les contenus d'au moins deux colonnes ( 2, 3 ) étant reliés entre eux logiquement,
**caractérisé**
**en ce que** les au moins deux colonnes ( 2, 3 ), dont les contenus sont reliés entre eux logiquement, sont définies sous la forme d'une unité, d'une façon telle que
d'une part :
les au moins deux colonnes ( 2, 3 ) de l'unité peuvent être déplacées toujours seulement conjointement et/ou les au moins deux colonnes ( 2, 3 ) de l'unité peuvent être masquées ou démasquées seulement conjointement
mais d'autre part
à chacune des au moins deux colonnes de l'unité, sont toutefois associées toutes les fonctions de colonne associées sinon pour chaque colonne individuelle, par l'éditeur de tableau, notamment la propriété de sélection et de tri colonne par colonne et la possibilité de modification de la largeur de colonne en tirant les séparateurs.

2. Procédé suivant la revendication 1, **caractérisé en ce que** les au moins deux colonnes ( 2, 3 ), dont les contenus sont combinés entre eux logiquement, sont visualisables pour l'utilisateur sous la forme d'une unité optique.

3. Procédé suivant la revendication 1 ou 2, **caractérisé en ce que** les au moins deux colonnes ( 2, 3 ), dont les contenus sont combinés entre eux logiquement, sont visualisables pour l'utilisateur par des séparateurs de couleurs différentes dans le marquage des colonnes.

4. Dispositif de création d'un tableau dans un environnement d'automatisation, comprenant un éditeur de tableau, qui met à disposition une multiplicité de colonnes,
**caractérisé**
**en ce qu'**il est prévu des moyens, qui définissent au moins deux colonnes ( 2, 3 ) dont les contenus sont combinés entre eux logiquement sous la forme d'une unité, dans laquelle les au moins deux colonnes ( 2, 3 ) de l'unité peuvent être déplacées toujours seulement conjointement et/ou peuvent être masquées ou démasquées toujours seulement conjointement, mais d'autre part à chacune des au moins deux colonnes de l'unité restent toutefois associées toutes les fonctions de colonnes associées sinon aussi pour chaque colonne individuelle par l'éditeur de tableau.

5. Dispositif suivant la revendication 4,
**caractérisé**
**en ce qu'**il est prévu des moyens, qui visualisent pour l'utilisateur sous la forme d'une unité optique les au moins deux colonnes ( 2, 3 ), dont les contenus sont combinés entre eux logiquement.
